# EUROPÄISCHE PATENTSCHRIFT

(11) **EP 2 160 599 B1**
(45) Veröffentlichungstag und Bekanntmachung des Hinweises auf die Patenterteilung: **08.03.2017**
(21) Anmeldenummer: 08773548.6
(22) Anmeldetag: 20.06.2008
(51) Int. Cl.: G01N 33/15, G01N 35/04, G01N 21/35

(54) **VERFAHREN UND VORRICHTUNG ZUM POSITIONIEREN UND GEGEBENENFALLS AUSRICHTEN EINES OBJEKTS**
METHOD AND DEVICE FOR POSITIONING AND OPTIONALLY ALIGNING AN OBJECT
PROCÉDÉ ET DISPOSITIF DE POSITIONNEMENT ET, ÉVENTUELLEMENT, D'ORIENTATION D'UN OBJET

(30) Priorität: 20.06.2007 DE 102007028171; 15.11.2007 DE 102007054908; 15.11.2007 DE 102007054909
(43) Veröffentlichungstag der Anmeldung: 10.03.2010
(73) Patentinhaber: Krämer, Thilo, 64291 Darmstadt (DE)
(72) Erfinder: Krämer, Thilo, 64291 Darmstadt (DE)
(74) Vertreter: Hamel, Armin
(86) Internationale Anmeldenummer: PCT/EP2008/004995
(87) Internationale Veröffentlichungsnummer: WO 2008/155128

(56) Entgegenhaltungen:
- EP-A- 1 445 217
- EP-A- 1 462 792
- DE-A1-102004 059 976
- DE-U1- 8 516 163
- DE-U1- 20 206 782
- US-B1- 6 237 743
- US-B1- 7 053 373

## Beschreibung

Die Erfindung betrifft ein Verfahren und eine Vorrichtung zur Positionierung und gegebenenfalls Ausrichtung eines tablettenförmigen Prüflings, wie Oblong, Tablette, Pille, Dragee oder Kapsel, auf einer Auflagefläche.

### Stand der Technik:

Bei der Herstellung tablettenförmiger, pharmazeutischer, chemischer oder lebensmitteltechnischer Produkte, wie etwa Oblong, Tablets, Tabletten, Pillen oder Dragees, müssen eine Vielzahl von Eigenschaften der Produkte beachtet und eingehalten werden. Zur Kontrolle werden deshalb Prüflinge aus der laufenden Produktion stichprobenartig entnommen, gesammelt und unter anderem in Bezug auf ihre physikalischen Eigenschaften, beispielsweise Gewicht, Härte sowie Zerfallszeit in einem Medium wie auch die Abmessungen des Prüflings untersucht, gemessen und gegebenenfalls registriert.

Durch WO 01/90744 ist eine Vorrichtung zur automatischen Qualitätskontrolle von tablettenförmigen Prüflingen bekannt geworden. Die Vorrichtung besteht aus einer Zuführeinrichtung, welche die gesammelten Prüflinge vereinzelt, und einem Transportstern mit peripher angeordneten Aufnahmekammern für je einen Prüfling, in welche die Prüflinge zugeführt werden. In den Aufnahmekammern abgelegte Prüflinge werden mittels des Transportsterns schrittweise einer oder mehreren Prüfstationen zugeführt und, sofern es sich um zerstörungsfreie Prüfungen handelt, anschließend beispielsweise in einen Linearförderer ausgeworfen und zu Archivierungszwecken gesammelt. Bei einer zerstörenden Prüfung der Prüflinge findet der Auswurf der zerstörten Prüflinge meist direkt in der jeweiligen Prüfstation statt, beispielsweise durch eine Öffnung in einer die Aufnahmekammern nach unten begrenzenden Auflage, auf welcher der Transportstern dreht. Bei den Prüfstationen handelt es sich beispielsweise um einen Härtetester, eine Waage sowie einer Einrichtung zur Bestimmung der Abmessungen, wie etwa Länge und/oder Breite und/oder Dicke der Prüflinge.

Des Weiteren ist durch die DE 85 16 163 U1 Haltevorrichtung für Prüfkörper, insbesondere Tabletten und dergleichen, bekannt geworden, bei der jeweils ein Prüfkörper mittels einer Transportvorrichtung zu einer Prüfeinrichtung transportiert wird, mit einem Trageteil, an dem eine bewegliche Halterung mit mehreren Niederhaltern angeordnet ist, die jeweils Prüfkörpern mit verschiedenen Formen zugeordnet sind und diese auf einer Grundplatte festhalten und/oder ausrichten, und zwar durch eine Antriebseinrichtung, die die Halterung derart bewegt, dass sie einen für den jeweiligen Prüfkörper geeigneten Niederhalter in eine Arbeitsposition bringt, und durch eine Absenkeinrichtung, die jeweils den in der Arbeitsposition befindlichen Niederhalter auf die Grundplatte absenkt, um den Prüfkörper festzuhalten und/oder auszurichten.

Zur Bestimmung der Dicke der Prüflinge ist es bekannt, eine berührungsfreie Messung durchzuführen, bei der die Prüflinge einzeln von elektromagnetischen Wellen geeigneter Wellenlänge durchleuchtet werden. Das Streu- und/oder Durchlicht ist dabei ein Maß für die Dicke bzw. die jeweilige Abmessung des Prüflings entlang derjenigen Achse, entlang der die Durchleuchtung stattfindet. Als besonders zweckmäßig hat sich hierbei die so genannte NIR-Prüfung (NIR: Near Infra Red) erwiesen, bei der elektromagnetische Wellen des nahen Infrarotbereichs zur Durchleuchtung der Prüflinge verwendet werden.

Aus der EP 1462792 A1 ist ein Verfahren und eine Vorrichtung zur Prüfung von Produkten in Form von Kapseln mittels Nahinfrarotreflexionssprektroskopie bekannt. Dabei wird eine Kapsel zwischen einer rotierbaren Backe und einer manuell gegen die Kraft einer Feder lösbaren Backen eingespannt. Nach Einspannen der Kapsel wird diese mechanisch rotiert und mittels Nahinfrarotspektroskopie geprüft, ob sie den vorgesehenen Inhalt aufweist. Diese Vorrichtung ist beschränkt auf Kapseln. Das Einbringen und das Positionieren der Kapseln in der Prüfvorrichtung muss manuell erfolgen. Lediglich das Drehen des Prüflings für die Nahinfrarotspektroskopie erfolgt mechanisch.

Aus der EP 1445217 A2 ist darüber hinaus eine Vorrichtung zum Abbremsen und Verkürzen des Transportweges von aus einer Zufuhreinrichtung kommenden festen Erzeugnissen in Form von Schüttgut, wie Oblongs, bekannt. Die zugeführten Oblongs werden in einer Kammer eines Transportsterns abgelegt. Der Boden dieser Kammer steht fest, während sich der Transportstern rotierend bewegt. Dabei reibt der Prüfling auf der feststehenden Oberfläche, so dass zwischen Prüfling und Auflagefläche Reibkräfte wirken, die dazu führen, dass sich der Prüfling an die seitliche Abstützfläche des Transportsterns anlegt. Eine Arretierung oder Positionierung des Prüflings erfolgt in dieser Vorrichtung nicht.

Um ein verifizierbares Maß für die Qualitätskontrolle zu erhalten, ist es bei nicht scheibenförmigen, sondern beispielsweise tropfen-, oliven-, zylinder- oder torpedoförmigen Prüflingen sowie bei Prüflingen mit bombierten Formen erforderlich, dass die Durchleuchtung immer an derselben Stelle bzw. entlang der selben Achse der Prüflinge stattfindet.

Der Erfindung liegt die Aufgabe zu Grunde, ein Verfahren und eine Vorrichtung zu schaffen, welche mit geringem Aufwand eine exakte Positionierung und ggf. auch Ausrichtung eines Objekts, z.B. eines mittels einer Testapparatur zu prüfenden Pharmazeutikums wie Tablette, Pille, Dragee, Kapsel oder Oblong, auf einer Unterlage bzw. Auflagefläche ermöglichen, wobei beispielsweise auch eine wiederkehrende, exakte Ausrichtung der Objekte zur Dickenmessung und gegebenenfalls Inhaltsfeststellung mittels Durchleuchtung möglich sein soll.

Offenbarung der Erfindung und deren Vorteile:
Die Aufgabe wird erfindungsgemäß durch ein Verfahren gelöst zum Positionieren und gegebenenfalls Ausrichtung eines tablettenförmigen Prüflings, wie Oblong, Tablette, Pille, Dragee oder Kapsel, auf einer Auflagefläche eines Schiebers, unter Verwendung einer schließ- und öffenbaren Backenanordnung mit zwei einander gegenüberliegenden Backen, deren jede eine der jeweils anderen Backe zugewandte Kontaktfläche aufweist, wobei
   - wenigstens eine der Backen eine Aussparung aufweist, welche so geformt ist, dass sich zwischen den Kontaktflächen ein Zwischenraum zur Aufnahme des Prüflings befindet, welcher zum Öffnen der Backenanordnung vergrößerbar und zum Schließen der Backenanordnung verkleinerbar ist,
   - die Backen so geformt sind, dass der Prüfling bei geöffneter Backenanordnung über eine Zugangsöffnung in den Zwischenraum einbringbar und in diesem bei geschlossener Backenanordnung formschlüssig oder kraftschlüssig halterbar ist,
und folgende Schritte ausgeführt werden:
   a) die Backenanordnung wird geöffnet,
   b) der Prüfling wird auf die Auflagefläche des Schiebers aufgebracht,
   c) die Backenanordnung und der Schieber werden relativ zueinander so bewegt, dass der Prüfling die Zugangsöffnung passiert und in dem Zwischenraum zu liegen kommt,
   d) die Backenanordnung wird geschlossen und hierdurch der Prüfling an einer durch die Form der Kontaktflächen festgelegten Stelle auf der Auflagerfläche des Schiebers positioniert und ggf. ausgerichtet, wobei im Schritt c) die Schließbewegung der Backenanordnung mechanisch aus der Relativbewegung zwischen Schieber und Backenanordnung abgeleitet wird.

Die Schritte a) und b) sind in ihrer Reihenfolge vertauschbar. Bevorzugt werden die Schritte a) bis d) vollautomatisch, z.B. rechnergesteuert, durchgeführt.

Die Aufgabe wird ferner gelöst durch eine Vorrichtung zum Positionieren und gegebenenfalls Ausrichten eines tablettenförmigen Prüflings, insbesondere eines pharmazeutischen Objekts, wie Tablette, Pille, Oblong, Dragee, Kapsel oder dergleichen, mit einer beweglich angeordneten Unterlage zur Auflage des Prüflings, bei der, dieselbe eine schließ- und öffenbaren Backenanordnung mit zwei einander gegenüberliegenden Backen aufweist, deren jede eine der jeweils anderen Backe zugewandte Kontaktfläche aufweist, wobei mindestens eine der Kontaktflächen ausgespart ist dergestalt, dass zwischen den Kontaktflächen ein Zwischenraum zur Aufnahme des Prüflings gebildet ist, wobei die geöffneten Backen eine Zugangsöffnung ausbilden, über die der Prüfling mittels der relativ zur Backenanordnung beweglich angeordneten Unterlage in den Zwischenraum einbringbar und bei geschlossenen Backen kraft- oder formschlüssig in diesem halterbar ist.

Bei kraftschlüssiger Halterung ist der tablettenförmige Prüfling zwischen den Backen geklemmt und kann durch die Backenanordnung aufgenommen und an anderer Stelle wieder abgelegt werden.

Die Wirkung von Schritt d) ist, dass der tablettenförmige Prüfling an einer durch die Form der Kontaktflächen festgelegten Stelle auf der Auflagefläche des Schiebers positioniert und ggf. ausgerichtet wird.

Der Zwischenraum ist vorzugsweise auch bei geschlossener Backenanordnung oben, das heißt nach oben hin, offen.

Insbesondere kann als tablettenförmiger Prüfling ein solcher verwendet werden, welcher im Schritt d) nicht nur positioniert, sondern auch ausgerichtet wird. Der tablettenförmige Prüfling kann zu diesem Zweck ein nicht rotationssymmetrischer bzw. bezüglich einer senkrecht zur Auflagefläche des Schiebers verlaufenden Achse nicht rotationssymmetrischer tablettenförmiger Prüfling sein. Der tablettenförmige Prüfling kann insbesondere ein solcher sein, welcher bei Aufliegen auf der Auflagefläche des Schiebers keine solche Lage stabil annehmen kann, in welcher es bezüglich einer senkrecht zur Auflagefläche des Schiebers verlaufenden Achse rotationssymmetrisch ist. Der tablettenförmige Prüfling kann also insbesondere ein stabförmiger oder sonstiger länglicher, an den Stirnenden abgerundeter Prüfling sein.

Bevorzugt ist als tablettenförmiger Prüfling ein solcher verwendbar, welcher im Schritt d) nicht nur positioniert, sondern auch ausgerichtet wird. Als tablettenförmiger Prüfling kann ein nicht rotationssymmetrischer oder ein liegender länglicher, tablettenförmiger Prüfling verwendbar sein, so dass dieses durch den Schritt d) nicht nur positionierbar, sondern auch ausrichtbar ist.

Gemäß einer Variante ist eine der Backen um eine Drehachse schwenkbar gelagert und die Backenanordnung durch Schwenken dieser Backe öffen- und schließbar. Gemäß einer anderen Variante ist jede der Backen um je eine Drehachse schwenkbar gelagert und die Backenanordnung durch Schwenken beider Backen öffen- und schließbar.

Gemäß einer bevorzugten Variante wird im Schritt c) die Schließbewegung der Backenanordnung mechanisch aus der Relativbewegung zwischen Schieber und Backenanordnung abgeleitet.

Hierzu kann eine der Backen einen Mitnehmer aufweisen, wobei im Schritt c) die Schließbewegung der Backenanordnung mechanisch aus der Relativbewegung zwischen Schieber und Backenanordnung dadurch abgeleitet wird, dass über den Mitnehmer eine Krafteinleitung vom Schieber in die Backe erfolgt. Gemäß einer anderen Variante weist jede der Backen je einen Mitnehmer auf, wobei im Schritt c) die Schließbewegung der Backenanordnung mechanisch aus der Relativbewegung zwischen Schieber und Backenanordnung dadurch abgeleitet wird, dass über die Mitnehmer eine Krafteinleitung vom Schieber in beide Backen erfolgt.

Gemäß einer bevorzugten Ausführungsform ist die Schließbewegung der Backenanordnung mechanisch aus der Relativbewegung zwischen Schieber und Backenanordnung ableitbar. Beispielsweise kann hierbei eine der Backen einen Mitnehmer aufweisen und die Schließbewegung der Backenanordnung mechanisch aus der Relativbewegung zwischen Schieber und Backenanordnung durch Krafteinleitung vom Schieber über den Mitnehmer in die Backe ableitbar sein. Gemäß einer anderen Ausführungsform weist jede der Backen je einen Mitnehmer auf, wobei die Schließbewegung der Backenanordnung mechanisch aus der Relativbewegung zwischen Schieber und Backenanordnung durch Krafteinleitung vom Schieber über die Mitnehmer in beide Backen ableitbar ist. Der Mitnehmer kann insbesondere an der Unterseite der Backe angeordnet sein, bzw. die Mitnehmer können an den Unterseiten der Backen angeordnet sein. Beide Backen können insbesondere auf einem gemeinsamen Tragarm angeordnet sein. Bevorzugt wird der Schieber im Schritt c) unter die Backen verfahren. Gemäß einer bevorzugten Ausführungsform der ist der Schieber zur Ausführung des Schrittes c) unter die Backen verfahrbar. Die Backenanordnung weist bevorzugt zusätzlich eine Feder auf, welche die Backenanordnung zu öffnen versucht. In diesem Fall erfolgt der Schritt d) federbelastet.

Bevorzugt wird der tablettenförmige Prüfling im Schritt d) zwischen den Kontaktflächen geklemmt oder spielfrei gelagert. Gemäß einer bevorzugten Ausführungsform der Vorrichtung ist der tablettenförmige Prüfling bei geschlossener Backenanordnung zwischen den Kontaktflächen geklemmt oder spielfrei gelagert.

In vom Transportstern weggefahrenem Zustand kann der Schieber um eine vertikale Achse schwenkbar sein, um den Prüfling an eine außerhalb des Transportsterns angeordnete Prüfstation zu übergeben und/oder zur Übergabe des Prüflings an eine Sammeleinrichtung, beispielsweise zu Archivierungszwecken. Bei der Prüfstation kann es sich beispielsweise um eine NIR-Durchleuchtungs-Prüfstation handeln.

Gemäß einer besonders vorteilhaften Ausgestaltung der Erfindung ist die Vorrichtung Bestandteil einer Vorrichtung zur automatischen Qualitätskontrolle von Prüflingen, welche mindestens aus einer Zuführeinrichtung, welche gesammelte Prüflinge vereinzelt, einem Transportstern mit peripher angeordneten Aufnahmekammern für je einen Prüfling, sowie mindestens einer Prüfstation besteht. In den Aufnahmekammern abgelegte Prüflinge sind dabei mittels des Transportsterns schrittweise der Vorrichtung zur Ausrichtung eines Prüflings und/oder der mindestens einen Prüfstation zuführbar.

Kurzbeschreibung der Zeichnung, in der zeigen:
- Fig. 1: eine perspektivische Ansicht einer im von peripheren Aufnahmekammern eines Transportsterns überstrichenen Bereich einer Auflage angeordneten Vorrichtung zur exakten Ausrichtung eines tablettenförmigen Prüflings,
- Fig. 2: die Vorrichtung aus Fig. 1, wobei ein ein Halbnest aufweisender Schieber teilweise von dem Transportstern weggefahren ist,
- Fig. 3: eine Detailansicht der in Fig. 2 gezeigten Situation in einer Draufsicht,
- Fig. 4: eine perspektivische Detailansicht des Schiebers der in den Fig. 1 bis 3 gezeigten Vorrichtung,
- Fig. 5 und 6: den um eine vertikale Achse schwenkbaren Schieber aus Fig. 4 in zwei Draufsichten in unterschiedlichen Verfahrstellungen
- Fig. 7: eine perspektivische Ansicht einer Vorrichtung zur automatischen Qualitätskontrolle von Prüflingen, welche die in Fig. 1 bis 5 dargestellte Vorrichtung umfasst,
- Fig. 8: eine Draufsicht auf Figur 7,
- Fig. 9: eine Seitenansicht der Vorrichtung der Fig. 7, 8 in einem Röntgenblick,
- Fig. 10: eine Draufsicht auf den vom Transportstern zu einer Prüfstation verfahrenen Schieber, der mit einem Prüfling beladen ist,
- Fig. 11: eine vergrößerte Darstellung eines Tragarms, der Teil der Prüfstation ist, mitsamt dem darin ausgebildeten dritten Nest, in welches der Schieber mit dem Prüfling gefahren ist,
- Fig. 12: eine weitere Ausgestaltung eines Nests mittels zweier geöffneter Backen, welches hier das dritte Halbnest in der Prüfstation zu ersetzen imstande ist,
- Fig. 13: die Ausgestaltung des Nests der Figur 12 mittels geschlossener Backen und erfolgter Ausrichtung sowie Positionierung des Prüflings und
- Fig. 14: eine weitere Ausgestaltung eines erfindungsgemäßen Nests, welches ebenfalls das dritte Halbnest in der Prüfstation zu ersetzen imstande ist, mittels zweier Backen zur Positionierung von runden oder kugelförmigen Prüflingen.

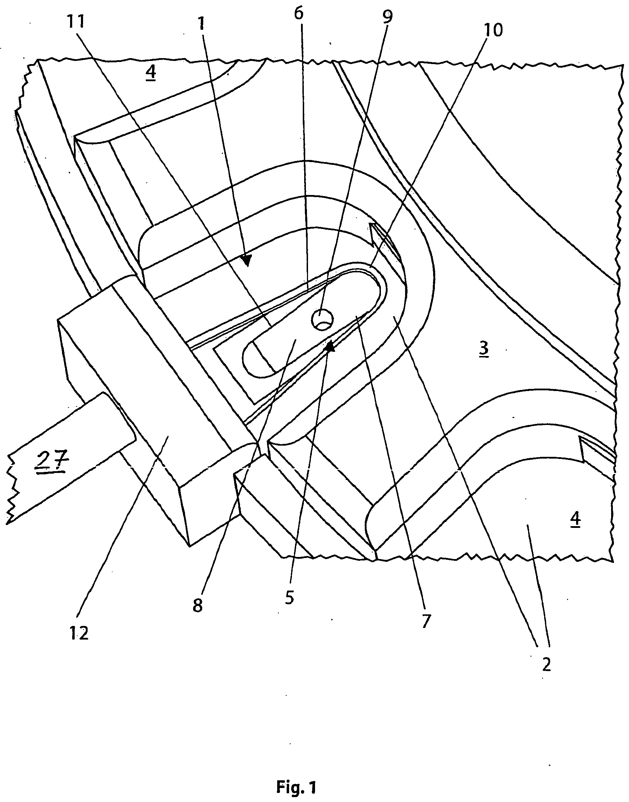

Wege zur Ausführung der Erfindung:
Eine in den Figuren 1 bis 3 dargestellte Vorrichtung 1 dient zur exakten Ausrichtung eines tablettenförmigen Prüflings und besteht im Wesentlichen aus einem zumindest teilweise in einer eine peripher offene Aufnahmekammer 2 zur Aufnahme eines Prüflings in einem Transportstern 3 nach unten begrenzenden, ebenen Auflage 4 ausgebildeten Nest 5, mit Ausdehnungsmaßen in X-, Y- und Z-Richtung. Der Transportstern 3 dreht sich somit auf der Auflage 4 unter Mitnahme der Prüflinge innerhalb der Aufnahmekammern 2, wobei die Prüflinge auf der Auflage 4 gleiten. Das Nest 5 besteht aus einem zumindest teilweise in der Auflage 4 angeordneten, bündig mit der Oberfläche der Auflage 4 abschließenden, einen horizontalen Querschnitt des auszurichtenden Prüflings in einer gewünschten Soll-Ausrichtungslage zumindest teilweise nachbildenden Ausschnitt 6 sowie einer unter dem Ausschnitt 6 angeordneten Ausnehmung 7 oder Mulde, in welche der Prüfling unter Einwirkung der Schwerkraft bis zu einem durch den Ausschnitt des Nests 5 nachgebildeten horizontalen Querschnitt unter gleichzeitiger Ausrichtung in die Soll-Ausrichtungslage hineinfällt. Der Ausschnitt 6 ist peripher offen.

Die Tiefe der Ausnehmung 7 in Z-Richtung und damit des Nests 5 ist derart bemessen, dass diese im Wesentlichen dem Abstand von einer horizontalen Unterlage aus zu einem ersten in Form und Abmessungen dem Ausschnitt des Nests entsprechenden Querschnitt eines in Soll-Ausrichtungslage auf der horizontalen Unterlage liegenden Prüflings entspricht, zum Beispiel der halben Höhe oder auch etwas weniger, in z-Richtung, des Prüflings bei dessen horizontaler Lage. Vorzugsweise ist die Längsachse des Nests 5 radial gerichtet, so dass vorzugsweise die Soll-Ausrichtungslage des Prüflings in radialer Richtung verläuft.

Im Boden 8 der Ausnehmung 7 ist eine Öffnung 9 in Form eines durchgehenden Lochs angeordnet, durch welche ein Strahlebündel von elektromagnetischen Wellen oder auch von Schallwellen, vorzugsweise ein Near-Infra-Red-Lichtstrahl (NIR) oder ein Laser, zur Durchleuchtung des Prüflings, vorzugsweise zu seiner Dickenmessung, hindurchtreten kann.

Das Nest 5 ist des Weiteren in einem von den peripheren Aufnahmekammern 2 des Transportsterns 3 überstrichenen Bereich der die Aufnahmekammern 2 zur Aufnahme jeweils eines Prüflings des Transportsterns 3 nach unten begrenzenden ebenen Auflage 4 angeordnet. Das Nest 5 wird durch zwei in einer senkrechten Draufsicht jeweils eine halbe Form des Ausschnitts 6 bildende Halbnester 10, 11 gebildet.

Ein erstes Halbnest 10 ist dabei in der Auflage 4 angeordnet, wobei die Kontur des Ausschnitts 6 entsprechend dem Querschnitt des Prüflings sich im hinteren, vom peripheren Rand abgewandten Teil des Ausschnitts 6 befindet.

Ein zweites Halbnest 11 ist in einem radial gegen den Transportstern 3 verschiebbaren Schieber 12 angeordnet, der auch verschwenkbar ist und der an einem Arm 27 befestigt ist. In einer senkrechten Draufsicht bilden die beiden Halbnester 10, 11 in gegen den Transportstern 3 verfahrenem und in Figur 1 dargestellten Zustand des Schiebers 12 das Nest 5.

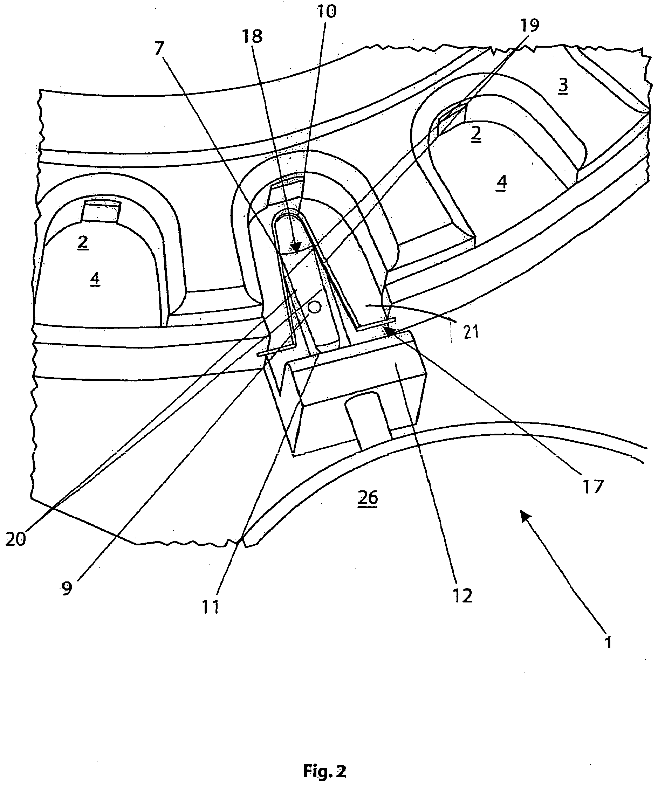

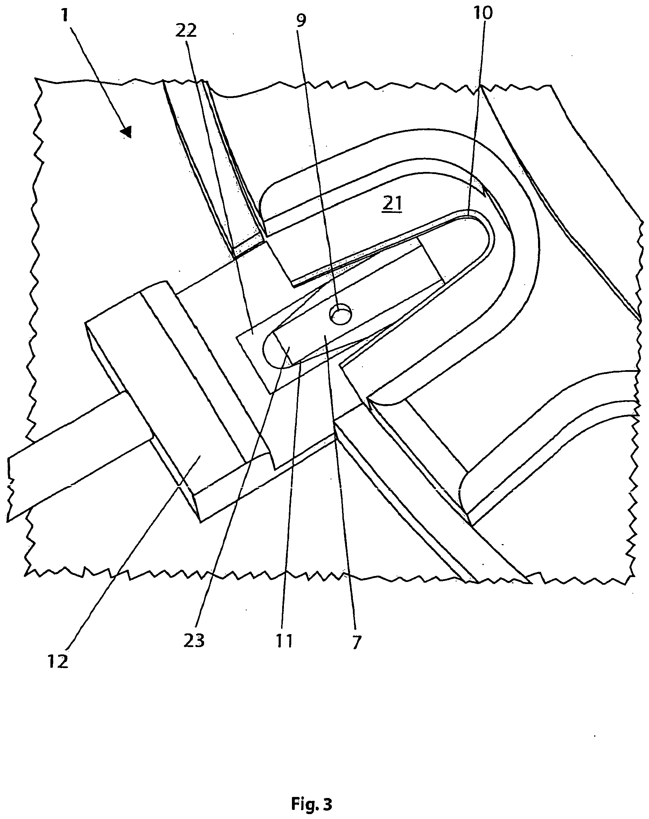

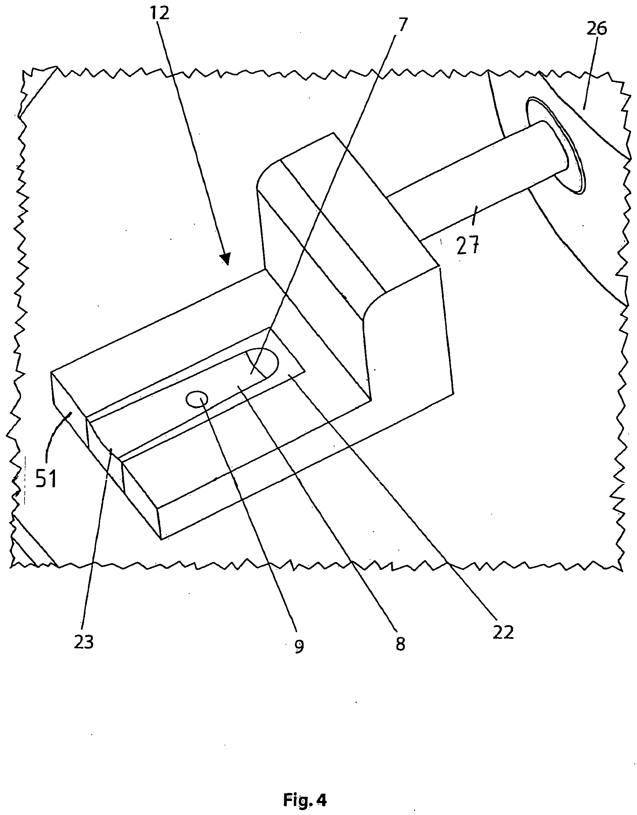

Die Ausnehmung 7 oder Mulde ist, wie am besten in den Figuren 2 bis 4 erkennbar, Bestandteil des Schiebers 12. Die Kontur der Ausnehmung oder Mulde, entspricht wiederum dem Querschnitt des Prüflings, wobei die den Querschnitt des Prüflings nachbildende Kontur sich im hinteren Bereich des Schiebers befindet, wie es insbesondere den Figuren 3 und 4 zu entnehmen ist. Die Ausnehmung 7 oder Mulde des Schiebers ist nach vorn hin, zum peripheren Rand des Transportsterns 3 hin gerichtet, offen. Zusammengesetzt aus den Konturen der beiden Halbnester 10 und 11 bilden diese das Nest 5.

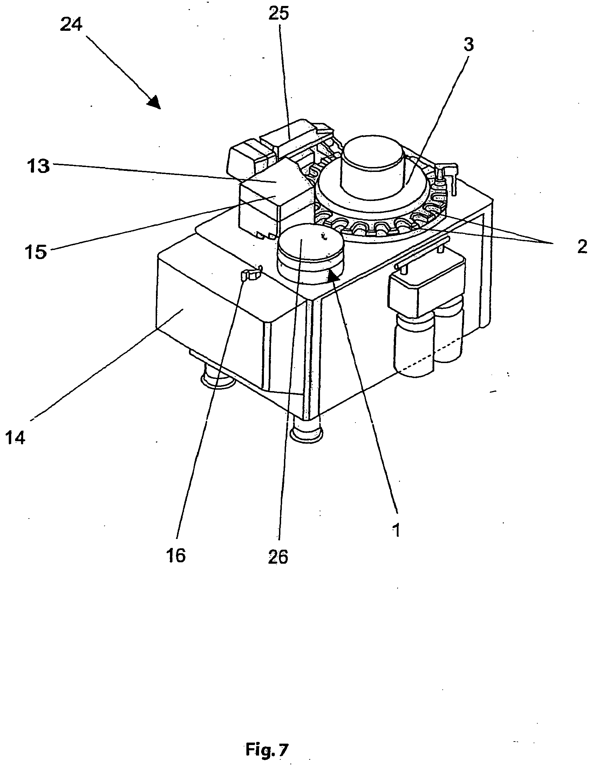

Wird der Schieber 12 in radialer Richtung hin zum Transportstern 3 verfahren, wobei der Schieber 12 den Transportstern 3 zu unterfahren imstande ist, so fällt der Prüfling aus der Aufnahmekammer 2 unter gleichzeitiger Ausrichtung in das Nest 5 und verbleibt in diesem ausgerichteten Zustand beim Wegfahren des Schiebers 12 in radialer Richtung vom Transportstern 3 auf dem Schieber 12. Durch das Hineinfallen des Prüflings in das Nest 5 wird der Prüfling auf dem Schieber 12 exakt ausgerichtet und kann anschließend von dem Schieber 12 an eine Prüfstation 13, Figur 7, oder dergleichen übergeben werden oder gemeinsam mit dem Schieber 12 in eine Prüfstation 13 einfahren.

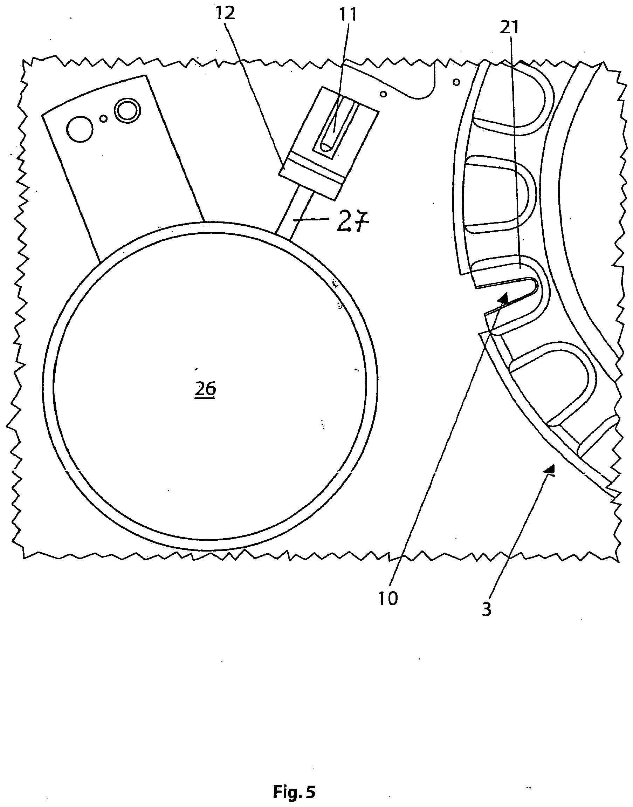

In vom Transportstern 3 weggefahrenem Zustand kann der Schieber 12, wie in Figur 5 dargestellt, um eine vertikale Achse geschwenkt werden, zum Beispiel zur Übergabe des Prüflings an eine außerhalb des Transportsterns 3 angeordnete Prüfstation 13, Figur 7, und/oder zur Übergabe des Prüflings an eine Sammeleinrichtung 14, Figur 7, beispielsweise zu Archivierungszwecken. Der Schieber 12 ist hierzu mittels seines Arms 27 an einem Drehturm 26 angeordnet. Bei der Prüfstation 13 kann es sich zum Beispiel um eine NIR-Durchleuchtungs-Prüfstation 15 zur Messung der Dicke der Prüflinge handeln.

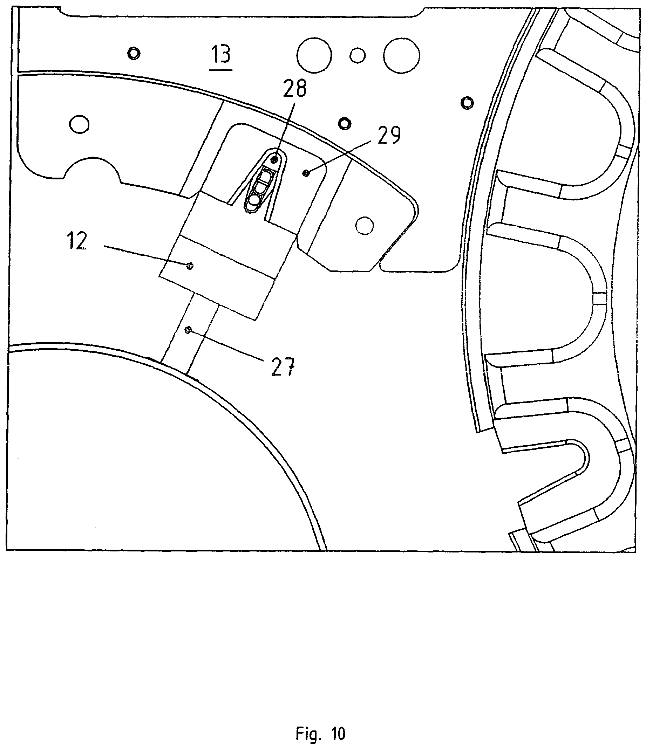

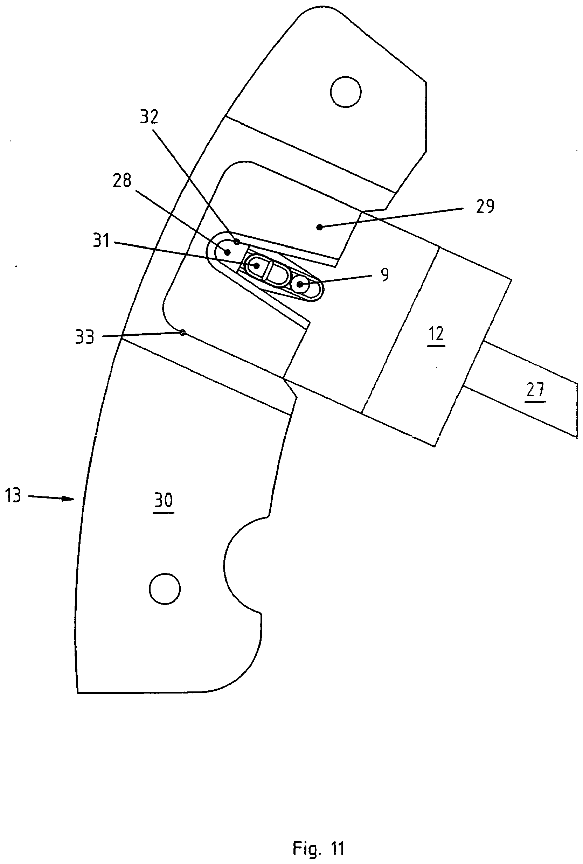

Der Schieber 12 ist in einer in Richtung der Prüfstation 13 verschwenkten Position in die Prüfstation 13 einfahrbar, wobei die Prüfstation 13 ein drittes Halbnest 28 umfasst, welches bei in die Prüfstation 13 eingefahrenem Schieber 12 gemeinsam mit dem am Schieber 12 angeordneten zweiten Halbnest 11 der Ausnehmung 7 bzw. Mulde wiederum ein volles Nest ausbildet zur nochmaligen exakten Ausrichtung des Prüflings 31 vor seiner Durchleuchtung in der Prüfstation 13. Dieses dritte Halbnest 28 ist insbesondere den Figuren 10 und 11 zu entnehmen. Die Ausgestaltung und die Kontur 32 des dritten Halbnests entspricht der Ausgestaltung und der Kontur 6 des ersten Halbnests 10.

Wie in der Figur 7 zu erkennen, ist oberhalb des Schiebers 12 in dessen Schwenkbereich eine Barriere 16 in Form eines Hakens angeordnet, unter die der Schieber 12 derart verschwenkbar ist, dass bei einem Einfahren oder bei einem Weiterschwenken des Schiebers 12 ein auf dem Schieber 12 liegender Prüfling 31 von der Barriere 16 in die Sammeleinrichtung 14 abgestreift wird.

Wie in den Figuren 2 und 3 erkennbar ist, weisen die Halbnester 10, 11 auf deren einander zugewandten Seiten 17, 18 divergierende Verlängerungen 19, 20 ihrer Kontur auf, so dass ein in der Ausnehmung 7 liegender, beispielsweise vor dem Einfahren des Schiebers 12 in den Transportstern 3 in dem ersten Halbnest 10 abgelegter, oder ein mittels des Schiebers 12 zur Prüfstation 13 transportierter Prüfling durch Einfahren des Schiebers 12 in das erste Halbnest 10 oder in das dritte, in der Prüfstation 13 angeordnete Halbnest 28 durch die Verlängerungen 19, 20 sowie die Konturen 6, 32 des ersten und dritten Halbnests 10, 28 ausgerichtet wird.

Zur einfachen Anpassbarkeit der Vorrichtung 1 an unterschiedliche Formen der Prüflinge sind die gemeinsam den Ausschnitt 6 des Nests 5 bildenden Halbnester 10, 11 in der Auflage 4 bzw. am Schieber 12 sowie des dritten Halbnests 28 in der Prüfstation 13 lösbar angeordnet. Die Halbnester 10, 11, 28 sind dabei in austauschbaren Abdeckplatten 21, 22 (Fig. 4) angeordnet und ausgeformt. Dabei ist auch der Ausschnitt des dritten in der Prüfstation 13 angeordneten Halbnests in einer auswechselbaren Abdeckplatte 29 angeordnet, um die Vorrichtung 1 mit geringst möglichem Aufwand an unterschiedliche Formen und Abmessungen der Prüflinge anpassen zu können.

Die Ausnehmung 7 ist, wie in Fig. 4 deutlich erkennbar, schalen- bzw. rinnenförmig oder teilmuldenförmig ausgebildet. Die Schalen- oder Rinnenform ist dabei an die Form des in die Ausnehmung hineinfallenden Teils des Prüflings angepasst bzw. bildet diesen nach.

Die Ausnehmung 7 weist in Richtung der Soll-Ausrichtungslage betrachtet einen konkaven Querschnitt auf. Auch die die Ausnehmung 7 bildende Mulde 23 ist zur einfacheren Anpassbarkeit der Vorrichtung 1 an unterschiedliche Formen der Prüflinge lösbar und austauschbar am Schieber 12 angeordnet. Mulde 23 und Abdeckplatte 22 des Schiebers 12 können auch einstückig ausgebildet sein.

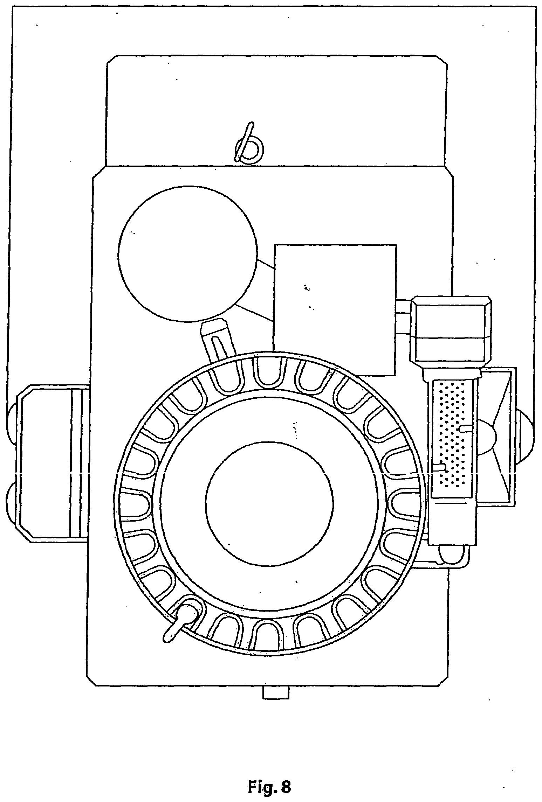

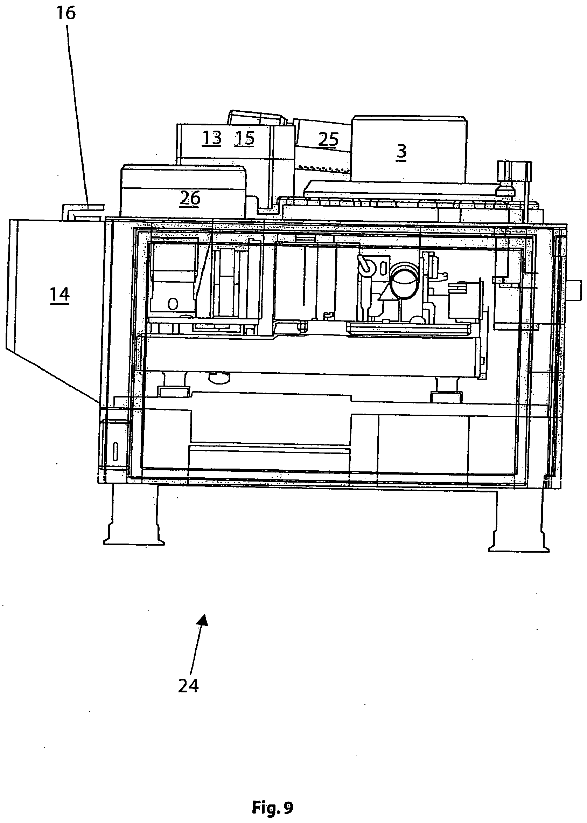

Wie in den Figuren 7, 8 und 9 erkennbar kann die Vorrichtung 1 Bestandteil einer Vorrichtung 24 zur automatischen Qualitätskontrolle von Prüflingen sein, welche mindestens aus einer Zuführeinrichtung 25, welche gesammelte Prüflinge vereinzelt, einem Transportstern 3 mit peripher angeordneten Aufnahmekammern 2 für je einen Prüfling, sowie mindestens einer Prüfstation 13 besteht. In den Aufnahmekammern 2 abgelegte Prüflinge sind dabei mittels des Transportsterns 3 schrittweise der Vorrichtung 1 zur Ausrichtung eines Prüflings und/oder der mindestens einen Prüfstation 13 zuführbar.

Wichtig ist hervorzuheben, dass in Abhängigkeit von der Form des Prüflings der Ausschnitt oder die Kontur 6 des Nests 5 bzw. der drei Halbnester 10, 11, 28 nicht exakt wie ein entsprechender Querschnitt des Prüflings ausgebildet sein muss, sondern dass es genügt, durch die Konturen der Halbnester den Querschnitt des Prüflings in der Soll-Ausrichtungslage nachzubilden, beispielsweise durch eine mehreckige Form des Ausschnitts 6 oder allgemeiner durch eine diskrete, abschnittsweise linearisierte Form.

Die Figuren 10 und 11 zeigen die Ausgestaltung des dritten Halbnests 28 in der Prüfstation 13. Diese weist einen vorgelagerten Tragarm 30 auf, welcher, ähnlich der Aufnahmekammer 2 zur Ausgestaltung des Nests 5 in Figur 1, einen peripher nach vorn geöffneten Einschnitt 33 aufweist, in welchem eine auswechselbare Abdeckplatte 29 angeordnet ist, welche eine ebenfalls peripher nach vorn geöffnete, hier V-förmig gestaltete Aussparung aufweist zur Ausbildung des dritten Halbnests 28. Zumindest der hintere Teil der Kontur 32 der Aussparung 28 oder des Halbnests bildet, wenigstens zum Teil, den Querschnitt des Prüflings 31 nach. Der Schieber 12 ist imstande, den Tragarm 30 im Bereich des Einschnitts in radialer Richtung zu unterfahren, wie es in den Figuren 10 und 11 gezeigt ist. Dann bildet das Halbnest 11 des Schiebers 12 sowie das Halbnest 28 innerhalb des Tragarms 30 wiederum ein volles Nest zur nochmaligen lagemäßigen Ausrichtung des Prüflings 31 aus.

Wie der Figur 11 zu entnehmen ist, befindet sich der Prüfling 31 noch nicht über dem Durchgangsloch 9 innerhalb der Mulde 23 des Schiebers 12. Zum Überprüfen beispielsweise seiner Dicke muss der Prüfling 31 hinsichtlich seiner Lage mittig über dem Durchgangsloch 9 platziert werden. Indem der Schieber 12 bis zu seiner Endstellung den Tragarm 30 und damit den Einschnitt 33 unterfährt, wird der Prüfling 31 mittels der Kontur 32 des Halbnests 28 innerhalb der Mulde 23 des Schiebers 12 verschoben, bis der Prüfling 31 exakt mittig über dem Durchgangsloch 9 des Schiebers 12 platziert ist. Innerhalb der Prüfstation 13 befindet sich unterhalb des Tragarms 30 und in Endstellung des Schiebers 12 exakt unterhalb seines Durchgangsloches 9 eine (nicht gezeigte) Quelle zur Aussendung eines Strahls elektromagnetischer Strahlung, welche den Prüfling 31 zur Messung durchstrahlt.

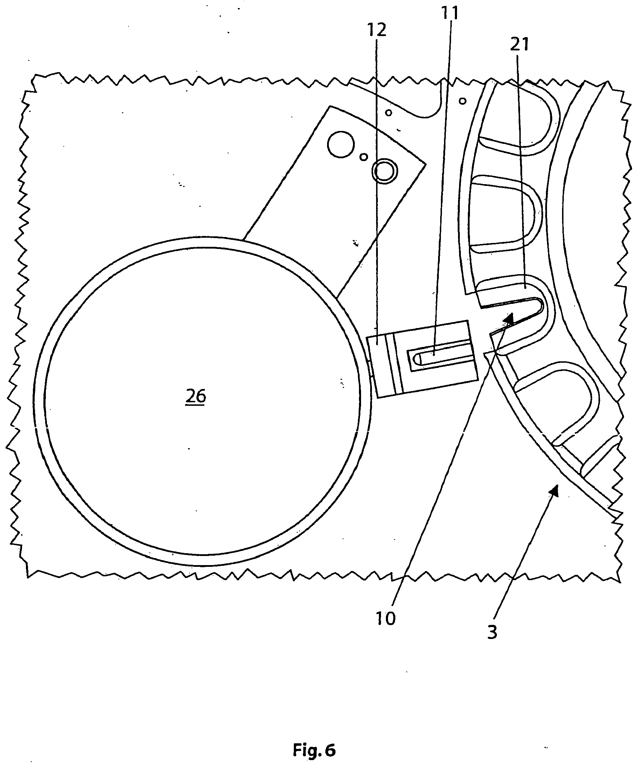

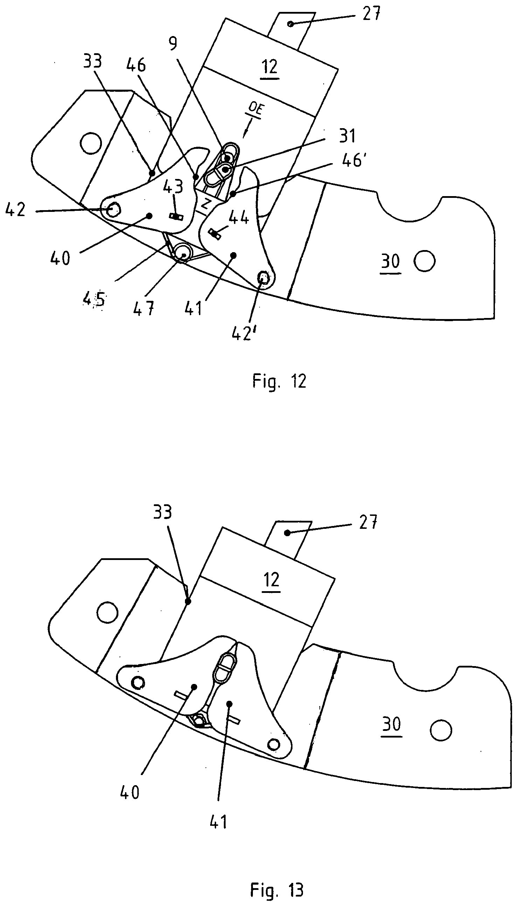

In einer weiteren Ausgestaltung der erfindungsgemäßen Vorrichtung zur Positionierung und gegebenenfalls Ausrichtung eines tablettenförmigen Prüflings, wie Oblongs, Tablets, Tabletten, Pillen oder Dragees, weist diese zur Auflage des Prüflings eine beweglich angeordnete Unterlage auf, vorzugsweise ein Schieber 12 gemäß der Figuren 1 bis 9, auf welchem der Prüfling aufzuliegen imstande ist, wobei in den Figuren 12 und 13 eine erfindungsgemäße Ausgestaltung eines Nests dargestellt ist, welches das dritte Halbnest in der Prüfstation zu ersetzen imstande ist.

Diese weitere Ausgestaltung weist - statt dem Nest 28 der Figur 11 - eine schließ-und öffnenbaren Backenanordnung mit zwei einander gegenüberliegenden Backen 40, 41 auf, deren jede eine der jeweils anderen Backe 40, 41 zugewandte Kontaktfläche 46, 46' besitzt, wobei mindestens eine der Kontaktflächen 46, 46' ausgespart ist dergestalt, dass zwischen den Kontaktflächen 46, 46' ein Zwischenraum Z zur Aufnahme des Prüflings 31, 50 gebildet ist. Die geöffneten Backen 40, 41 bilden eine Zugangsöffnung OE aus, über die der Prüfling 31, 50 mittels der relativ zur Backenanordnung beweglich angeordneten Unterlage 12, vorzugsweise in Form des Schiebers 12, in den Zwischenraum Z einbringbar und bei geschlossenen Backen 40, 41 formschlüssig in dem Zwischenraum Z halterbar ist. Die Backen 40,41 sind beide auf dem Tragarm 30 um je eine Drehachse 42 bzw. 42' schwenkbar angeordnet. Die Backen 40,41 weisen je eine Aussparung auf, welche so geformt ist, dass sich zwischen den Kontaktflächen 46,46' der Zwischenraum Z zur Aufnahme des Objekts bzw. des Prüflings 31 befindet. Der Zwischenraum Z ist zum Öffnen der Backenanordnung 40,41 vergrößerbar, indem die Backe 40 um die Drehachse 42 nach links und die Backe 41 um die Drehachse 42' nach rechts geschwenkt wird (Figur 12). Figur 12 zeigt die Backenanordnung in geöffneter Stellung. Ebenso ist der Zwischenraum durch jeweils umgekehrtes Schwenken der Backen 40,41 verkleinerbar. Figur 13 zeigt die Backenanordnung in geschlossener Stellung.

Die Backen 40,41 sind so geformt, dass das Objekt 31 bei geöffneter Backenanordnung 40,41 über die Zugangsöffnung OE in den Zwischenraum Z einbringbar (Figur 12) und in diesem bei geschlossener Backenanordnung (40,41) formschlüssig halterbar ist (Figur 13). Erfindungsgemäß werden folgende Schritte ausgeführt:
a) die Backenanordnung 40,41 wird geöffnet, b) das Objekt, d.h. der Prüfling, wird auf die Auflagefläche des Schiebers 12 aufgebracht, c) der Schieber 12 wird in Bezug auf die Backenanordnung 40,41 so bewegt, dass das Objekt 31 die Zugangsöffnung OE passiert und in dem Zwischenraum Z zu liegen kommt (diese Situation ist in Figur 12 dargestellt), d) die Backenanordnung 40,41 wird nun geschlossen und hierdurch das Objekt 31 an einer durch die Form der Kontaktflächen 46,46' festgelegten Stelle auf der Auflagefläche des Schiebers 12 positioniert und ggf. ausgerichtet (diese Situation ist in Figur 13 dargestellt).

Bei geschlossener Backenanordnung 40,41 ist der Prüfling 31 vorzugsweise zwischen den Kontaktflächen 46,46 spielfrei gehaltert oder geklemmt. Der Zwischenraum Z ist im vorliegenden Beispiel auch bei geschlossener Backenanordnung 40,41 oben geöffnet.

Nach dem Schritt d) kann die Backenanordnung 40,41 wieder geöffnet werden, wobei der Prüfling 31, ohne seine Lage oder Ausrichtung zu ändern, also erfindungsgemäß positioniert und ausgerichtet, auf dem Schieber 12 liegen bleibt. Der Schieber kann nun mitsamt dem darauf positionierten und ausgerichteten Prüfling 31 insbesondere so verfahren werden, dass der Prüfling an eine Prüfstation gelangt, ohne dass der Prüfling seine Lage und Ausrichtung bezüglich des Schiebers 12 ändert. Wenn nun der Schieber 12 in eine bestimmte, vorgegebene Lage und Ausrichtung bezüglich dieser Prüfstation gebracht wird, befindet sich nun vorteilhafterweise auch der Prüfling in einer exakt vorgegebenen Lage und Ausrichtung bezüglich der Prüfstation. Dies ist in der Praxis in vielen Fällen Voraussetzung für eine genaue, zuverlässige oder vorschriftsmäßige Prüfung des Prüflings 31 durch die Prüfstation. Dies wird durch die Erfindung ermöglicht. Die Prüfung kann z.B. in einem Durchleuchten eines ganz bestimmten, eng begrenzten Bereichs des Prüflings 31 mit einem Laserstrahl bestehen.

Der Tragarm 30 weist die peripher nach vorn geöffnete Aussparung 33 auf, in die der Schieber 12 einzufahren imstande ist. Im Bereich des Endes der Aussparung 33 sind sich gegenüberliegend die zwei Backen 40, 41 angeordnet, welche im Wesentlichen dreieckförmig gestaltet und symmetrisch sind, jedoch auch eine andere Gestalt aufweisen können. Die Backen 40, 41 sind um je eine Drehachse 42, 42' schwenkbar und vorzugsweise um je eine Drehachse 42, 42' aufeinander zu und voneinander weg drehbar gehaltert. Mittels einer zweiarmigen Feder 45 werden die Backen 40, 41 in Ruhestellung in geöffnetem Zustand federbelastet gehalten, wobei jeder Arm der Feder 45 gegen eine der Backen drückt und dadurch die Backenanordnung öffnet. Die Feder 45 ist im Bereich der hinteren Enden der Backen mittig auf der Symmetrielinie der Backen 40, 41 angeordnet. Des Weiteren weisen die Backen sich einander zugewandte Kontaktflächen 46, 46' auf, welche symmetrisch zueinander angeordnete Aussparungen aufweisen und zusammen den Zwischenraum Z aussparen, der zur Aufnahme des Prüflings 31 und zu dessen Positionierung und gegebenenfalls Ausrichtung dient. Somit weist jede Aussparung wenigstens teilweise die Kontur des Prüflings 31 auf.

In der Figur 12 fährt der Schieber in den Einschnitt 33 ein, wobei der Prüfling 31 schief auf dem Schieber 12 angeordnet ist; die Backen 40, 41 befinden sich in ihrer Offenstellung. Der Schieber 12 unterfährt hierbei die Backen 40,41. Beim weiteren Einfahren des Schiebers 12 in den Einschnitt 33 stößt die vordere Stirnfläche 51, Figur 4, an je eine auf der Unterseite der Backen 40, 41 angeordnete Nase 43, 44 an, welche in den Figuren gepunktet gezeichnet sind. Auf diese Weise erfolgt eine die Backenanordnung schließende Krafteinleitung vom Schieber 12 über die Nasen bzw. Mitnehmer 43,44 in die Backen 40,41, d.h. die Backen 40, 41 werden mitgenommen und um die Drehachsen 42, 42' gedreht. Dabei bewegen sich die Kontaktflächen 46, 46' aufeinander zu, die den Prüfling 31 berühren und bei weiterer Drehung der Backen 40, 41 bis in ihre Schließstellung den Prüfling 31 in den Aussparungen der Kontaktflächen 46, 46' aufnehmen und ausrichten. Die Endstellung des Schiebers mit geschlossenen Backen und erfolgter Positionierung und Ausrichtung des Prüflings 31 ist in der Figur 13 gezeigt. Damit weisen die Backen 40, 41 in einer allgemeinen Weise Mitnehmer 43, 44 auf, über welche die Backen 40, 41 beim Heranbewegen der Unterlage 12 oder des Schiebers 12 in die Schließstellung bewegbar sind unter Einschluss des Prüflings 31, 50 in dem Zwischenraum Z der Backen 40, 41.

Beim Zurückfahren des Schiebers 12 von den Backen 40,41 weg öffnet sich die Backenanordnung 40,41 auf Grund der Rückstellkraft der Feder 45.

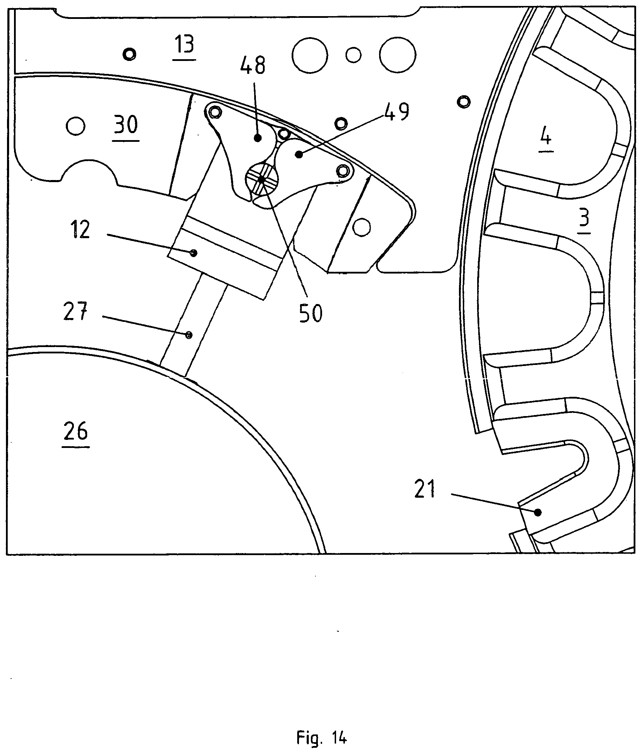

Die Figur 14 zeigt eine weitere Ausgestaltung eines Nests, welches ebenfalls das dritte Halbnest in der Prüfstation 13 zu ersetzen imstande ist, mittels zweier Backen zur Positionierung von runden oder kugelförmigen Prüflingen 50. Backen 48, 49 weisen einander zugewandte Kontaktflächen auf, deren Aussparungen dergestalt geformt sind, dass sie zur Positionierung von runden oder kugelförmigen Prüflingen 50 geeignet sind.

Die vorbeschriebene Ausgestaltung der Backenanordnung kann Teil der Vorrichtung gemäß der Figuren 1 bis 11 bzw. gemäß einem oder mehreren der Ansprüche 1 bis 19 sein. Ebenso kann die vorbeschriebene Ausgestaltung der Backenanordnung eine solche zur Durchführung des Verfahrens gemäß der Figuren 1 bis 11 bzw. gemäß einem oder mehreren der Ansprüche 20 bis 23 sein.

Gewerbliche Anwendbarkeit:
Die Erfindung ist insbesondere im Bereich der pharmazeutischen, chemischen und lebensmitteltechnischen Industrie zur Positionierung und Ausrichtung sowie zum Umgang von Prüflingen bei der automatischen Qualitätskontrolle zur Bestimmung von Eigenschaften, insbesondere von mechanisch-physikalischen Eigenschaften, der Prüflinge gewerblich anwendbar.

### Bezugszeichenliste:

- 1: Vorrichtung zur Ausrichtung eines tablettenförmigen Prüflings
- 2: Aufnahmekammer
- 3: Transportstern
- 4: Auflage
- 5: Nest
- 6: Ausschnitt oder Kontur
- 7: Ausnehmung
- 8: Boden
- 9: Durchgangsloch im Schieber
- 10, 11, 28: Halbnester
- 12: Schieber
- 13: Prüfstation
- 14: Sammeleinrichtung
- 15: NIR-Durchleuchtungs-Prüfstation
- 16: Barriere
- 17, 18: Seite
- 19, 20: Verlängerung
- 21, 22, 29: Abdeckplatte
- 23: Mulde
- 24: Vorrichtung zur automatischen Qualitätskontrolle von Prüflingen
- 25: Zuführeinrichtung
- 26: Drehturm
- 27: Arm
- 30: Tragarm
- 31, 50: Prüfling
- 32: Kontur des Halbnests
- 33: Einschnitt
- 40, 41, 48, 49: Backen
- 42, 42': Drehachsen
- 43, 44: Nasen
- 45: Feder
- 46, 46': Kontaktflächen innerhalb der Backen
- 47: Zapfen
- 51: Stirnfläche des Schiebers

## Patentansprüche

1. Verfahren zum Positionieren und gegebenenfalls Ausrichten eines tablettenförmigen Prüflings, wie Tablette (31), Pille, Oblong (50), Dragee, Kapsel oder dergleichen, auf einer Auflagefläche eines Schiebers (12), unter Verwendung einer schließ- und öffenbaren Backenanordnung (40,41) mit zwei einander gegenüberliegenden Backen (40,41), deren jede eine der jeweils anderen Backe (40,41) zugewandte Kontaktfläche (46,46') aufweist, wobei
- wenigstens eine der Backen (40,41) eine Aussparung aufweist, welche so geformt ist, dass sich zwischen den Kontaktflächen (46,46') ein Zwischenraum (Z) zur Aufnahme des Prüflings (31,50) befindet, weicher zum Öffnen der Backenanordnung (40,41) vergrößerbar und zu zum Schließen der Backenanordnung (40,41) verkleinerbar ist,
- die Backen (40,41) so geformt sind, dass der Prüfling (31,50) bei geöffneter Backenanordnung (40,41) über eine Zugangsöffnung (OE) in den Zwischenraum (Z) einbringbar und in diesem bei geschlossener Backenanordnung (40,41) formschlüssig oder kraftschlüssig halterbar ist,
und folgende Schritte ausgeführt werden:
a) die Backenanordnung (40,41) wird geöffnet,
b) der Prüfling (31,50) wird auf die Auflagefläche des Schiebers (12) aufgebracht,
c) die Backenanordnung (40,41) und der Schieber (12) werden relativ zueinander so bewegt, dass der Prüfling (31,50) die Zugangsöffnung (OE) passiert und in dem Zwischenraum (Z) zu liegen kommt,
d) die Backenanordnung (40,41) wird geschlossen und hierdurch der Prüfling (31,50) an einer durch die Form der Kontaktflächen (46,46') festgelegten Stelle auf der Auflagefläche des Schiebers (12) positioniert und ggf. ausgerichtet, wobei
im Schritt c) die Schließbewegung der Backenanordnung (40,41) mechanisch aus der Relativbewegung zwischen Schieber (12) und Backenanordnung (40,41) abgeleitet wird.

2. Verfahren nach Anspruch 1, **dadurch gekennzeichnet, dass**
- eine der Backen (40,41) einen Mitnehmer (43,44) aufweist und im Schritt c) die Schließbewegung der Backenanordnung (40,41) mechanisch aus der Relativbewegung zwischen Schieber (12) und Backenanordnung (40,41) dadurch abgeleitet wird, dass über den Mitnehmer (43,44) eine Krafteinleitung vom Schieber (12) in die Backe (40,41) erfolgt, oder
- jede der Backen (40,41) je einen Mitnehmer (43,44) aufweist und im Schritt c) die Schließbewegung der Backenanordnung (40,41) mechanisch aus der Relativbewegung zwischen Schieber (12) und Backenanordnung (40,41) dadurch abgeleitet wird, dass über die Mitnehmer (43,44) eine Krafteinleitung vom Schieber (12) in beide Backen (40,41) erfolgt.

3. Verfahren nach Anspruch 1 oder 2, **dadurch gekennzeichnet, dass** der Mitnehmer (43,44) an der Unterseite der Backe (40,41) angeordnet ist oder die Mitnehmer (43,44) an den Unterseiten der Backen (40,41) angeordnet sind.

4. Verfahren nach einem der einem der vorherigen Ansprüche,
**dadurch gekennzeichnet, dass** der Schieber (12) im Schritt c) unter die Backen (40,41) verfahren wird.

5. Verfahren nach einem der einem der vorherigen Ansprüche,
**dadurch gekennzeichnet, dass** die Backenanordnung zusätzlich eine Feder (45) aufweist, welche die Backenanordnung zu öffnen versucht, so dass der Schritt d) federbelastet erfolgt.

6. Vorrichtung zum Positionieren und gegebenenfalls Ausrichten eines tablettenförmigen Prüflings, insbesondere pharmazeutisches Objekt, wie Tablette (31), Pille, Oblong (50), Dragee, Kapsel oder dergleichen, mit einer beweglich angeordneten Unterlage (12) zur Auflage des Prüflings (31, 50), **dadurch gekennzeichnet, dass** dieselbe eine schließ- und öffenbaren Backenanordnung mit zwei einander gegenüberliegenden Backen (40, 41) aufweist, deren jede eine der jeweils anderen Backe (40, 41) zugewandte Kontaktfläche (46, 46') aufweist, wobei mindestens eine der Kontaktflächen (46, 46') ausgespart ist dergestalt, dass zwischen den Kontaktflächen (46, 46') ein Zwischenraum (Z) zur Aufnahme des Prüflings (31, 50) gebildet ist, wobei die geöffneten Backen (40, 41) eine Zugangsöffnung (OE) ausbilden, über die der Prüfling (31, 50) mittels der relativ zur Backenanordnung beweglich angeordneten Unterlage (12) in den Zwischenraum (Z) einbringbar und bei geschlossenen Backen (40, 41) kraft- oder formschlüssig in diesem halterbar ist.

7. Vorrichtung nach Anspruch 6, **dadurch gekennzeichnet, dass** die Schließbewegung der Backenanordnung (40,41) mechanisch aus der Relativbewegung zwischen Schieber (12) und Backenanordnung (40,41) ableitbar ist.

8. Vorrichtung nach Anspruch 6 oder 7, **dadurch gekennzeichnet, dass**
- eine der Backen (40,41) um eine Drehachse (42,42') schwenkbar gelagert ist und die Backenanordnung (40,41) durch Schwenken dieser Backe (40,41) öffen- und schließbar ist, oder
- jede der Backen (40,41) um je eine Drehachse (42,42') schwenkbar gelagert ist und die Backenanordnung (40,41) durch Schwenken beider Backen (40,41) öffen- und schließbar ist.

9. Vorrichtung nach einem der Ansprüche 6 bis 8, **dadurch gekennzeichnet, dass**
- eine der Backen (40,41) einen Mitnehmer (43,44) aufweist und die Schließbewegung der Backenanordnung (40,41) mechanisch aus der Relativbewegung zwischen Schieber (12) und Backenanordnung (40,41) durch Krafteinleitung vom Schieber (12) über den Mitnehmer (43,44) in die Backe (40,41) ableitbar ist, oder
- jede der Backen (40,41) je einen Mitnehmer (43,44) aufweist und die Schließbewegung der Backenanordnung (40,41) mechanisch aus der Relativbewegung zwischen Schieber (12) und Backenanordnung (40,41) durch Krafteinleitung vom Schieber (12) über die Mitnehmer (43,44) in beide Backen (40,41) ableitbar ist.

10. Vorrichtung nach Anspruch 9, **dadurch gekennzeichnet, dass** der Mitnehmer (43,44) an der Unterseite der Backe (40,41) angeordnet ist oder die Mitnehmer (43,44) an den Unterseiten der Backen (40,41) angeordnet sind.

11. Vorrichtung nach einem der Ansprüche 6 bis 10, **dadurch gekennzeichnet, dass** der Schieber (12) zur Ausführung des Schrittes c) unter die Backen (40,41) verfahrbar ist.

12. Vorrichtung nach einem der Ansprüche 6 bis 11, **dadurch gekennzeichnet, dass** die Backenanordnung (40, 41) zusätzlich eine Feder (45) aufweist, welche die Backenanordnung (40, 41) zu öffnen versucht, so dass die Backen (40, 41) in Ruhestellung geöffnet und gegen die Kraft der Feder (45) schließbar sind.

13. Vorrichtung nach einem der Ansprüche 6 bis 12, **dadurch gekennzeichnet, dass** beide Backen (40,41) auf einem gemeinsamen Tragarm (30) angeordnet sind.

14. Vorrichtung nach einem der Ansprüche 6 bis 13, **dadurch gekennzeichnet, dass** die Backen (40, 41) der Backenanordnung im Wesentlichen dreieckförmig gestaltet und um je eine Drehachse (42, 42') aufeinander zu und voneinander weg schwenkbar gehaltert sind.

15. Vorrichtung nach einem der Ansprüche 6 bis 14, **dadurch gekennzeichnet, dass** die Vorrichtung imstande ist, folgende Schritte selbsttätig auszuführen:
a) Öffnen der Backenanordnung (40,41),
b) Aufbringen des Prüflings (31,50) auf die Auflagefläche des Schiebers (12),
c) Ausführen einer solchen Relativbewegung zwischen der Backenanordnung (40,41) und dem Schieber (12), dass der Prüfling (31,50) die Zugangs¬öffnung (OE) passiert und in dem Zwischenraum (Z) zu liegen kommt,
d) Schließen der Backenanordnung (40,41).

## Claims

1. Method for positioning and optionally aligning a tablet-form sample, such as tablet (31), pill, oblong (50), dragée, capsule or the like, on a bearing surface of a slide (12) using an openable and closable jaw assembly (40, 41) with two opposing jaws (40, 41) each of which comprises a contact face (46, 46') facing the in each case other jaw (40, 41), wherein
- at least one of the jaws (40, 41) comprises a recess that is implemented such that between the contact faces (46, 46') an interspace (Z) is located for receiving the sample, which interspace is enlargeable or diminishable for opening the jaw assembly (40, 41) and for closing the jaw assembly (40, 41), respectively,
- the jaws (40, 41) are implemented such that, with the jaw assembly (40, 41) open, the sample (31, 50) can be introduced into the interspace (Z) through an access opening (OE) and, with the jaw assembly (40, 41) closed, is retainable therein under form closure or force closure, and the following steps are carried out:
a) the jaw assembly (40, 41) is opened,
b) the sample (31, 50) is placed onto the bearing surface of the slide (12),
c) the jaw assembly (40, 41) and the slide (12) are moved relative to one another such that the sample (31, 50) passes through the access opening (OE) and comes to lie in the interspace (Z),
d) the jaw assembly (40, 41) is closed and the sample (31, 50) is hereby positioned at a site, determined by the form of the contact faces (46, 46'), on the bearing surface of the slide (12) and optionally aligned, wherein
the closing movement of the jaw assembly (40, 41) in step c) is mechanically derived from the relative movement between slide (12) and jaw assembly (40, 41).

2. Method as in claim 1, **characterized in that**
- one of the jaws (40, 41) comprises an entrainer (43, 44) and the closing movement of the jaw assembly (40, 41) in step c) is mechanically derived from the relative movement between slide (12) and jaw assembly (40,41) thereby that force application from the slide (12) into the jaw (40, 41) via the entrainer (43, 44) takes place or
- each of the jaws (40, 41) comprises an entrainer (43, 44) and the closing movement of the jaw assembly (40, 41) in step c) is mechanically derived from the relative movement between slide (12) and jaw assembly (40, 41) thereby that force application from the slide (12) onto both jaws (40, 41) via the entrainers (43, 44) takes place.

3. Method as in claim 1 or 2, **characterized in that** the entrainer (43, 44) is disposed on the underside of the jaw (40, 41) or the entrainers (43, 44) are disposed on the undersides of the jaws (40, 41).

4. Method as in one of the preceding claims, **characterized in that** the slide (12) is moved in step c) underneath the jaws (40, 41).

5. Method as in one of the preceding claims, **characterized in that** the jaw assembly (40, 41) comprises additionally a spring (45) which tends to open the jaw assembly (40, 41) such that step d) is carried out under spring loading.

6. Device for positioning and optionally aligning a tablet-form sample, in particular a pharmaceutical object, such as a tablet (31), pill, oblong (50), dragée, capsule or the like, with a movably disposed support 12 for bearing the sample (31, 50), **characterized in that** this device comprises an openable and closable jaw assembly (40, 41) with two opposing jaws (40, 41) each of which comprises a contact face (46, 46') facing the in each instance other jaw (40, 41), wherein at least one of the contact faces (46, 46') is recessed such that between the contact faces (46, 46') an interspace (Z) is formed for receiving the sample (31, 50), wherein the open jaws (40, 41) form an access opening (OE) via which the sample (31, 50) can be introduced into the interspace (Z) by means of the support [sic] (12) disposed movably relative to the jaw assembly and is retainable therein under force or form closure when the jaws (40, 41) are closed.

7. Device as in claim 6, **characterized in that** the closing movement of the jaw assembly (40,41) can be mechanically derived from the relative movement between slide (12) and jaw assembly (40, 41).

8. Device as in claim 6 or 7, **characterized in that**
- one of the jaws (40, 41) is supported pivotably about a rotational axis (42, 42') and the jaw assembly (40, 41) is openable and closable by swivelling this jaw (40, 41) or
- each of the jaws (40, 41) is supported pivotably about one rotational axis (42, 42') each and the jaw assembly (40, 41) is openable and closable by swivelling both jaws (40, 41).

9. Device as in one of claims 6 to 8, **characterized in that**
- one of the jaws (40, 41) comprises an entrainer (43, 44) and the closing movement of the jaw assembly (40, 41) is mechanically derivable from the relative movement between slide (12) and jaw assembly (40, 41) through force application from the slide (12) via the entrainer (43, 44) into the jaw (40, 41) or
- each of the jaws (40, 41) comprises an entrainer (43, 44) and the closing movement of the jaw assembly (40, 41) is mechanically derivable from the relative movement between slide (12) and jaw assembly (40, 41) through force application from the slide (12) via the entrainer (43, 44) into both jaws (40, 41).

10. Device as in claim 9, **characterized in that** the entrainer (43, 44) is disposed on the underside of the jaw (40, 41) or the entrainers (43, 44) are disposed on the undersides of the jaws (40, 41).

11. Device as in one of claims 6 to 10, **characterized in that** the slide (12) is movable underneath the jaws (40, 41) for carrying out step c).

12. Device as in one of claims 6 to 11, **characterized in that** the jaw assembly (40, 41) additionally comprises a spring (45) which tends to open the jaw assembly (40, 41) such that the jaws (40, 41) are open in their inactive position and are closable against the force of the spring (45).

13. Device as in one of claims 6 to 12, **characterized in that** both jaws (40, 41) are disposed on a common support arm (30).

14. Device as in one of claims 6 to 13, **characterized in that** the jaws (40, 41) of the jaw assembly are substantially implemented triangularly and are retained such that each can be swivelled about a rotational axis (42, 42') toward one another and away from one another.

15. Device as in one of claims 6 to 14, **characterized in that** the device is capable of automatically carrying out the following steps:
a) opening the jaw assembly (40, 41),
b) placing the sample (31, 50) onto the bearing surface of the slide (12),
c) carrying out a relative movement between the jaw assembly (40, 41) and the slide (12) such that the sample (31, 50) passes through the access opening (OE) and comes to lie in the interspace (Z),
d) closing the jaw assembly (40, 41).

## Revendications

1. Procédé de positionnement et éventuellement d'orientation d'un spécimen en forme de tablette, comme un comprimé (31), une pilule, une gélule (50), une dragée, une capsule ou analogue, sur la face de dépôt d'un tiroir (12), en utilisant un système de mâchoires à ouvrir et à fermer (40, 41) comprenant deux mâchoires (40, 41) opposées l'une à l'autre, dont chacune présente une face de contact (46, 46') respectivement tournée vers l'autre mâchoire (40, 41), dans lequel
- au moins une des mâchoires (40, 41) présente un évidement, qui est configuré de telle manière qu'il se trouve entre les faces de contact (46, 46') un espace intermédiaire (Z) destiné à recevoir le spécimen (31, 50), qui peut être agrandi pour l'ouverture du système de mâchoires (40, 41) et qui peut être réduit pour la fermeture du système de mâchoires (40, 41),
- les mâchoires (40, 41) sont configurées de telle manière que le spécimen (31, 50) puisse être introduit dans l'espace intermédiaire (Z) par une ouverture d'accès (OE) lorsque le système de mâchoires (40, 41) est ouvert et puisse être retenu dans celui-ci par emboîtement ou par adhérence lorsque le système de mâchoires (40, 41) est fermé,
et on exécute les étapes suivantes:
a) on ouvre le système de mâchoires (40, 41),
b) on dépose le spécimen (31, 50) sur la face de dépôt du tiroir (12),
c) on déplace l'un vers l'autre le système de mâchoires (40, 41) et le tiroir (12), de telle manière que le spécimen (31, 50) franchisse l'ouverture d'accès (OE) et vienne se placer dans l'espace intermédiaire (Z),
d) on ferme le système de mâchoires (40, 41) et de ce fait on positionne et éventuellement on oriente le spécimen (31, 50) en un endroit fixé par la forme des faces de contact (46, 46') sur la face de dépôt du tiroir (12), dans lequel
à l'étape c), on dérive le mouvement de fermeture du système de mâchoires (40, 41) mécaniquement du mouvement relatif entre le tiroir (12) et le système de mâchoires (40, 41).

2. Procédé selon la revendication 1, **caractérisé en ce que**
- une des mâchoires (40, 41) présente un élément d'entraînement (43, 44) et à l'étape c) on dérive le mouvement de fermeture du système de mâchoires (40, 41) mécaniquement du mouvement relatif entre le tiroir (12) et le système de mâchoires (40, 41) par le fait que l'on opère une introduction d'une force du tiroir (12) dans la mâchoire (40, 41) par l'intermédiaire de l'élément d'entraînement (43, 44), ou
- chacune des mâchoires (40, 41) présente chaque fois un élément d'entraînement (43, 44) et à l'étape c) on dérive le mouvement de fermeture du système de mâchoires (40, 41) mécaniquement du mouvement relatif entre le tiroir (12) et le système de mâchoires (40, 41) par le fait que l'on opère une introduction d'une force du tiroir (12) dans les deux mâchoires (40, 41) par l'intermédiaire des éléments d'entraînement (43, 44).

3. Procédé selon la revendication 1 ou 2, **caractérisé en ce que** l'élément d'entraînement (43, 44) est disposé sur le côté inférieur de la mâchoire (40, 41) ou les éléments d'entraînement (43, 44) sont disposés sur les côtés inférieurs des mâchoires (40, 41).

4. Procédé selon l'une quelconque des revendications précédentes, **caractérisé en ce que** l'on déplace le tiroir (12) à l'étape c) en dessous des mâchoires (40, 41).

5. Procédé selon l'une quelconque des revendications précédentes, **caractérisé en ce que** le système de mâchoires présente en outre un ressort (45), qui cherche à ouvrir le système de mâchoires, de telle manière que l'étape d) soit exécutée sous une charge de ressort.

6. Dispositif de positionnement et éventuellement d'orientation d'un spécimen en forme de tablette, en particulier d'un objet pharmaceutique, comme un comprimé (31), une pilule, une gélule (50), une dragée, une capsule ou analogue, avec un support (12) monté de façon mobile pour le dépôt du spécimen (31, 50), **caractérisé en ce que** celui-ci présente un système de mâchoires à ouvrir et à fermer avec deux mâchoires (40, 41) opposées l'une à l'autre, dont chacune présente une face de contact (46, 46') respectivement tournée vers l'autre mâchoire (40, 41), dans lequel au moins une des faces de contact (46, 46') est évidée, de telle manière qu'un espace intermédiaire (Z) soit formé entre les faces de contact (46, 46') pour recevoir le spécimen (31, 50), dans lequel les mâchoires ouvertes (40, 41) forment une ouverture d'accès (OE), par laquelle le spécimen (31, 50) peut être introduit dans l'espace intermédiaire (Z) au moyen du support (12) monté de façon mobile par rapport au système de mâchoires et puisse être retenu dans celui-ci par adhérence ou par emboîtement lorsque les mâchoires (40, 41) sont fermées.

7. Dispositif selon la revendication 6, **caractérisé en ce que** le mouvement de fermeture du système de mâchoires (40, 41) peut être dérivé mécaniquement du mouvement relatif entre le tiroir (12) et le système de mâchoires (40, 41).

8. Dispositif selon la revendication 6 ou 7, **caractérisé en ce que**
- une des mâchoires (40, 41) est montée de façon pivotante autour d'un axe de rotation (42, 42') et le système de mâchoires (40, 41) peut être ouvert et fermé par pivotement de cette mâchoire (40, 41), ou
- chacune des mâchoires (40, 41) est montée de façon pivotante autour d'un axe de rotation respectif (42, 42') et le système de mâchoires (40, 41) peut être ouvert et fermé par pivotement des deux mâchoires (40, 41).

9. Dispositif selon l'une quelconque des revendications 6 à 8, **caractérisé en ce que**
- une des mâchoires (40, 41) présente un élément d'entraînement (43, 44) et le mouvement de fermeture du système de mâchoires (40, 41) peut être dérivé mécaniquement du mouvement relatif entre le tiroir (12) et le système de mâchoires (40, 41) par une introduction d'une force du tiroir (12) dans la mâchoire (40, 41) par l'intermédiaire de l'élément d'entraînement (43, 44), ou
- chacune des mâchoires (40, 41) présente chaque fois un élément d'entraînement (43, 44) et le mouvement de fermeture du système de mâchoires (40, 41) peut être dérivé mécaniquement du mouvement relatif entre le tiroir (12) et le système de mâchoires (40, 41) par une introduction d'une force du tiroir (12) dans les deux mâchoires (40,41) par l'intermédiaire des éléments d'entraînement (43, 44).

10. Dispositif selon la revendication 9, **caractérisé en ce que** l'élément d'entraînement (43, 44) est disposé sur le côté inférieur de la mâchoire (40, 41) ou les éléments d'entraînement (43, 44) sont disposés sur les côtés inférieurs des mâchoires (40,41).

11. Dispositif selon l'une quelconque des revendications 6 à 10, **caractérisé en ce que** le tiroir (12) peut être déplacé en dessous des mâchoires (40, 41) pour l'exécution de l'étape c).

12. Dispositif selon l'une quelconque des revendications 6 à 11, **caractérisé en ce que** le système de mâchoires (40, 41) présente en outre un ressort (45), qui cherche à ouvrir le système de mâchoires (40, 41), de telle manière que les mâchoires (40, 41) soient ouvertes en position de repos et puissent être fermées contre la force du ressort (45).

13. Dispositif selon l'une quelconque des revendications 6 à 12, **caractérisé en ce que** les deux mâchoires (40, 41) sont disposées sur un bras de support commun (30).

14. Dispositif selon l'une quelconque des revendications 6 à 13, **caractérisé en ce que** les mâchoires (40, 41) du système de mâchoires sont essentiellement de forme triangulaire et sont montées de façon pivotante l'une vers l'autre et inversement autour d'un axe de rotation respectif (42,42').

15. Dispositif selon l'une quelconque des revendications 6 à 14, **caractérisé en ce que** le dispositif est en mesure d'exécuter automatiquement les étapes suivantes:
a) ouvrir le système de mâchoires (40, 41),
b) déposer le spécimen (31, 50) sur la face de dépôt du tiroir (12),
c) exécuter un mouvement relatif entre le système de mâchoires (40, 41) et le tiroir (12), de telle manière que le spécimen (31, 50) franchisse l'ouverture d'accès (OE) et vienne se placer dans l'espace intermédiaire (Z),
d) fermer le système de mâchoires (40, 41).
